Europäisches Patentamt

European Patent Office

Office européen des brevets

(11) Publication number: **0 520 542 A1**

# EUROPEAN PATENT APPLICATION

(21) Application number: **92201704.1**

(22) Date of filing: **11.06.92**

(51) Int. Cl.5: **B01D 46/04**

(30) Priority: **25.06.91 DK 1250/91**

(43) Date of publication of application:
**30.12.92 Bulletin 92/53**

(84) Designated Contracting States:
**DE DK ES FR IT**

(71) Applicant: **NORDFAB PLANT 1 A/S**
**Industrivej 13 Assens**
**DK-9550 Mariager(DK)**

(72) Inventor: **Petersen, Jes Hollerup**
**Oster Korupvej 11**
**Korup 9560 Hadsund(dk)**

(74) Representative: **Olsen, Peter Vestergaard (DK)**
**et al**
**c/o Larsen & Birkeholm A/S Skagensgade 64**
**P.O. Box 200**
**DK-2630 Taastrup(DK)**

(54) Damper for use in connection with air filtering plant.

(57) For use in the cleaning of the filter bags (3) by the back-pressure method, an air filter (1) is provided with a pivotable damper (15) which also comprises a passage (19) for the supply of clean air at the outlet (9) from the filter (1). The damper (15) is arranged in such a manner that in its open position for the outlet (9) it shuts the passage (19), while in its closed position it leaves said passage (19) free. The use of two damper plates is hereby avoided when cleaning by the back-pressure method.

Fig.1

BACKGROUND OF THE INVENTION

In filtering plants for the cleaning of gases, e.g. from the exhausts of working processes, filtering plants are used in the form of boxes with filter cloths, e.g. in the form of open bags, through which the air is blown, and the filter cloth in the bags separates particles from the gases. In order to clean the filters, the normal flow of air through the filter is shut off at regular intervals and air is blown through the bags in the opposite direction.

The invention thus relates to a damper or air valve for use in connection with such filtering plants as disclosed in the preamble to claim 1.

In one type of known filtering plant, an axial ventilator is installed in the exhaust channel from the plant, and during cleaning this ventilator can press the air in the opposite direction to the normal direction of flow during the cleaning process. Quite apart from the fact that the prsence of this kind of ventilator creates an undesired flow resistance in the system during normal filtration, the use of the axial ventilator demands a relatively large motor with subsequently high costs of installation and large power consumption in order to effect a substantial pressure, which is decisive in the cleaning of the filter cloth.

In another type of air filtering plant, bags are used with openings facing in a direction towards the normal exhaust side for the air. Here, a radial blower has been suspended in a rail system in the ceiling of the filter box, where the pressure side of the radial blower is provided with a stub of the same diameter as the opening in a bag. During cleaning, the radial blower is moved from bag to bag, depending on an automatic control, blowing air down into the bags individually. Where the costs of operation are concerned, this solution is relatively efficient, but the costs of installation are considerable.

A third known method of cleaning air filters is to use compressed air, where access is suddenly opened for a source of pressurized air connected to the exhaust side of the filter box. The subsequent pressure thrust against the normal direction of filtration loosens the dust in the filter cloth and it falls down into a collection chamber. This method can be applied with small filters, but due to the necessarily large volume of air to be supplied by the pressurized air source, it is not suitable for plants with large filter areas.

ADVANTAGES OF THE INVENTION

The new and special features of the damper according to the invention are that it comprises a valve housing with a throughgoing opening for connection to the channel system downstream from the filtering plant. Across the opening there is provided a pivotable damper plate and the valve housing has a channel piece which extends into the opening in the direction transversely to the axis of rotation of the damper plate. The channel piece has an outlet facing into the valve housing and forms an air passage transversely to the valve housing wall. The damper plate and the channel piece outlet are mutually arranged and configured in such a manner that the damper plate, when the damper is in its open position, can lie in a substantially airtight manner up against the edges of the channel piece outlet.

There can thus be installed a radial blower with the pressure side connected to the channel piece, and cleaning of the filter can be effected by merely blowing air through said channel piece, while at the same time the damper plate assumes the closed position. When the damper is opened, the damper plate may shut off the air passage through the channel piece at the same time.

By using a suitable damper motor, which is stopped by a quick-break switch, the damper according to the invention can be used in systems with several filter boxes, in that in its open position the damper prevents false air from penetrating into the plant. When the damper is in its closed position, the normal filtering will be stopped only in the relevant filter box, but filtering will continue in the remaining filter boxes.

In addition to being able to use a single radial blower for several filter boxes, the use is avoided hereby of complicated suspensions and the controlling of a special cleaning-air arrangement.

It is preferred that the damper is configured with the edges of the outlet of the channel piece lying approximately in a plane which includes the swivel axis, and extending parallel with the direction of the air flow in the opening during filtration. In addition to allowing a simple construction of the damper, this minimizes the flow resistance in the damper when it is in the open position.

THE DRAWING

In the following, an embodiment of the invention will be described by way of example with reference to the drawing, where
fig. 1 shows a filter box provided at its exhaust side with a damper according to the invention in its open position, seen in section, and
fig. 2 shows the same as fig. 1, but with the damper in its closed position.

DESCRIPTION OF AN EMBODIMENT OF THE INVENTION

A filter box 1 is provided with downwardly open filter bags 3. The filter box 1 has an air inlet 5 through which the polluted air is introduced into the filter box, where it flows into and through the bags 3 and further to the box's outlet 7 where the damper 9 according to the invention is connected.

It is preferred that the damper 9 is configured with a valve housing 11 having a rectangular cross-section, in which there is a damper plate 15 suspended via a transverse axle 13. It is preferred that the damper plate is substantially plane and that it extends on both sides of the axle 13 in a symmetrical manner, but other configurations are naturally possible, including damper plates which are pivotably suspended along their one edge.

Through the wall of the valve housing there is disposed a channel piece 17. This can be in the form of a quadratic or cylindrical channel which is provided with an mouth 19 formed by cutting off the channel piece 17 at right-angles to its longitudinal axis. The mouth 19 is provided with a resilient rubber collar or another kind of sealing element.

On the axle 13 on the outer side of the valve housing there is mounted a damper motor 21, the operation of which is controlled by a not-shown control system. The motor 21 can be of the slow-speed type with high moment and provided with a quick-break switch.

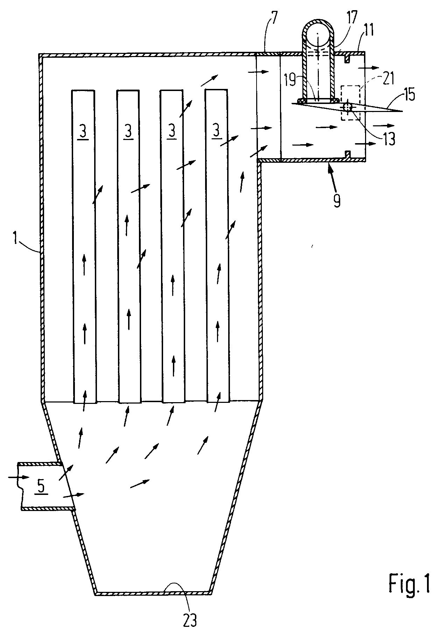

In the normal operating condition, which is shown in fig. 1, the damper 9 is open, and the damper plate 15 lies extended in about the same direction as the flow of air through the valve housing 11. It will thus be seen that the plate 15 herewith lies up against the edges of the mouth 19, hereby preventing air from seeping out from the channel piece 17, while at the same time the plate 15 affords minimal resistance to the air.

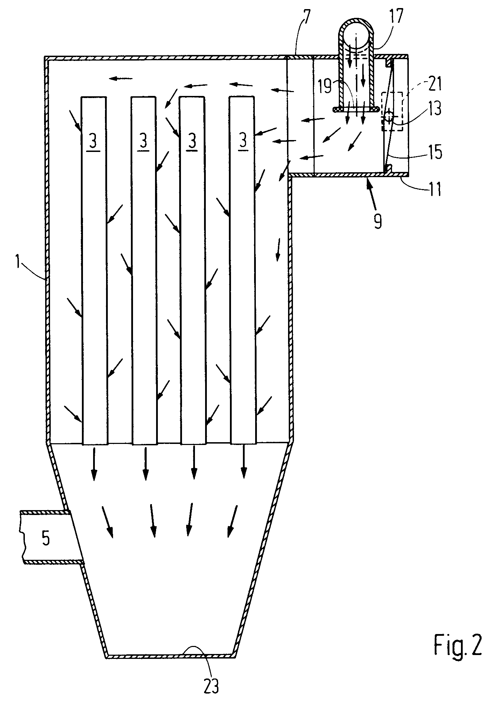

When the bags are to receive their periodic cleaning for the removal of collected dust and impurities, the flow of air through the filter box 1 is stopped merely by turning the damper plate to its closed position as shown in fig. 2. If the plant comprises only one filter box 1, the supply of air through the inlet 5 is shut off at the same time. If the filter box is arranged in parallel with other filter boxes in a large plant, the shutting off of the air supply and therewith the air pressure on the inlet side is not necessary, in that the supplied air merely flows to the remaining filter boxes. Regardless of whether the former or the latter is the case, air is now supplied through the channel piece 17 from a not-shown air-supply system, e.g. from a radial blower which can serve several filter boxes. Air is hereby pressed through the bags 3 in a direction opposite to that of the normal direction of filtration, and dust etc. can thus fall down into the bottom 23 of the filter box where it is collected.

Other configurations of the channel piece 17 and its mouth 19 are possible, e.g.the mouth 19 can be cut at an angle or have other forms, merely providing that the damper plate can be brought into sealing contact against the mouth during the filtration process.

In the above, the damper according to the invention is envisaged only as a cut-off valve during the cleaning, but it is possible within the scope of the invention to let it serve as a fire damper with the releasing function built into the motor or with fusible link and spring-loaded damper plate. In such a case, a further simplification of the known systems is achieved, in that a separate fire damper is hereby avoided.

## Claims

1. Damper (9) for use in connection with air filtering plants of the kind where cleaning of the filter (1) takes place periodically by reversing the flow of air through the filter (1) by means of a ventilator disposed downstream of the filter plant as seen in the filtration direction of the air flow, **characterized** in that the damper (9) comprises a valve housing (11) with a throughgoing opening for connection to the channel system downstream of the filtering plant, where in said opening a pivotable damper plate (15) is disposed, the turning axis (13) of which damper plate (15) extends transversely to the opening, and where in the valve housing (11) there is provided a throughgoing channel piece (17) provided with a mouth (19) facing the interior of the housing (11), which channel piece (17) forms an air passage transversely to the valve housing's walls and extends into the opening transversely to the turning axis (13), where the damper plate (15) when the damper (9) is in its open position can enter into sealing contact against the edges of the mouth (19) of the channel piece (17).

2. Damper according to claim 2, wherein the edges of the mouth (19) of the channel piece (17) lies approximately in a plane which includes the turning axis (13) and extends parallelly with the direction of the air flow in the opening during filtration.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AU-A-2 715 577 (MEEUWISSEN) 25 January 1979 <br> * page 7, line 13 - page 8, line 27; figures 1,3 * | 1,2 | B01D46/04 |
| A | FR-A-679 892 (BUHLER) <br> * the whole document * | 1,2 | |
| A | DE-C-556 619 (G. POLYSIUS AG) <br> * figures 1,2 * | 1,2 | |
| | | | TECHNICAL FIELDS SEARCHED (Int. Cl.5) |
| | | | B01D |

The present search report has been drawn up for all claims

| Place of search | Date of completion of the search | Examiner |
|---|---|---|
| THE HAGUE | 22 SEPTEMBER 1992 | CUBAS ALCARAZ J.L. |

EPO FORM 1503 03.82 (P0401)